# EUROPÄISCHE PATENTSCHRIFT

(11) **EP 2 900 493 B1**
(45) Veröffentlichungstag und Bekanntmachung des Hinweises auf die Patenterteilung: **06.06.2018**
(21) Anmeldenummer: 13742662.3
(22) Anmeldetag: 01.08.2013
(51) Int. Cl.: B60G 3/14, B60G 3/18, B60G 11/14, B60G 3/22, B60G 15/06, B60G 3/20, B60G 7/00

(54) **EINZELRADAUFHÄNGUNG EINES RADES EINES ZWEISPURIGEN FAHRZEUGS MIT EINEM SCHERENLENKER UND EINEM FEDERELEMENT**
INDEPENDENT SUSPENSION OF A WHEEL OF A VEHICLE WITH A SCISSORS-LIKE ARM AND A SPRING
SUSPENSION INDÉPENDANTE D'UNE ROUE D'UN VEHICULE AVEC UN BRAS EN FORME DE CISEAUX ET UN RESSORT

(30) Priorität: 25.09.2012 DE 102012217271
(43) Veröffentlichungstag der Anmeldung: 05.08.2015
(73) Patentinhaber: Bayerische Motoren Werke Aktiengesellschaft, 80809 München (DE)
(72) Erfinder: GIELISCH, Sebastian, 85716 Unterschleissheim (DE); KÖNIG, Roland, 82392 Habach (DE); LADSTÄTTER, Martin, 85232 Bergkirchen (DE); PRUCKNER, Alfred, 81545 Muenchen (DE); SCHLICHTE, Dirk, 80469 Muenchen (DE)
(86) Internationale Anmeldenummer: PCT/EP2013/066225
(87) Internationale Veröffentlichungsnummer: WO 2014/048621

(56) Entgegenhaltungen:
- EP-A2- 0 754 575
- WO-A1-2011/072967
- FR-A- 846 448
- US-A- 5 620 173
- US-A- 6 045 317
- US-A1- 2008 185 807

## Beschreibung

Die Erfindung betrifft eine Einzelradaufhängung eines Rades eines zweispurigen Fahrzeugs nach dem Oberbegriff des Anspruchs 1. Zum Stand der Technik wird neben der WO 2011/072967 auf die US 5,620,173 verwiesen.

Einzelradaufhängungen der erfindungsgemäßen Art kommen insbesondere bei Hinterachsen von Personenkraftwagen zum Einsatz. Bei diesen Hinterachsen sind die Räder üblicherweise nicht lenkbar und haben entsprechend bekanntlich einen großen Einfluss auf die Fahrstabilität und Fahrsicherheit des Fahrzeugs. Um in möglichst allen Fahrsituationen ein stabiles Fahrverhalten zu erreichen, sind moderne Hinterachsen kinematisch so ausgelegt, dass sie über den Einfederweg einen negativen Radsturzwinkel erzeugen. Der negative Radsturzwinkel dient zur Maximierung der übertragbaren Seitenkräfte relativ zum Fahrzeugaufbau bzw. zur Karosserie. Außerdem ist kinematisch über den Einfederweg des Rades gegenüber dem Fahrzeugaufbau sowie elastokinematisch unter auf das Rad einwirkender Längskräfte (insbesondere durch Abbremsen) ein Vorspurwinkel am Rad gewünscht, um ein untersteuerndes Fahrverhalten zu erzeugen und ein plötzliches Ausbrechen des Hecks bei Lastwechsel zu verhindern. Für ein derartiges Verhalten ergeben sich heutzutage relativ aufwändige Achskonstruktionen beispielsweise in Form von Fünflenkerachsen oder Schräglenkerachsen. Jedoch haben diese Achskonstruktionen neben hohen Kosten den weiteren Nachteil, dass sie einen hohen Bauraumbedarf aufweisen. Demgegenüber etwas günstiger sind die ebenfalls bekannten Verbundlenkerachsen, die jedoch gewisse Nachteile im fahrdynamischen Verhalten aufweisen.

Aus WO 2011/072967 ist eine Einzelradaufhängung eines nicht lenkbaren Rades eines zweispurigen Fahrzeugs bekannt, bei der ein Längslenker an seinem bezogen auf die Fahrtrichtung hinteren Endbereich ein zugehöriges Rad stützt. Der Längslenker ist ferner an seinem vorderen Endbereich am Fahrzeugaufbau mittels eines Pendellenkers angelenkt und in seinem Mittelbereich mittels eines Scherenlenkers am Fahrzeugaufbau angelenkt.
Die eingangs weiterhin genannte US 5,620,173 zeigt die Merkmale des Oberbegriffs des Anspruchs 1 in Form einer sog. doppeltwirkenden vibrationssicheren Struktur mit verteiltem Druck, die angeblich zwischen dem Aufbau und der Achse eines Fahrzeugs vorgesehen sein kann.

Der Erfindung liegt die Aufgabe zugrunde eine Einzelradaufhängung zu schaffen, die einen besonders kleinen Bauraum erfordert und dennoch zu einer präzisen Radführung mit den geforderten Winkeln führt, um insbesondere in möglichst allen Fahrsituationen ein stabiles Fahrverhalten zu erreichen.
Die Aufgabe ist mit einer Einzelradaufhängung gemäß Anspruch 1 gelöst. Vorteilhafte Weiterbildungen der Erfindung sind in den abhängigen Ansprüchen definiert.

Gemäß der Erfindung ist eine Einzelradaufhängung eines Rades eines zweispurigen Fahrzeugs geschaffen, mit einem Längslenker, der an einem seiner beiden Endbereiche an einem Fahrzeugaufbau des Fahrzeugs angelenkt ist und an seinem anderen Endbereich einen Radträger stützt, einem am Längslenker angelenkten und den Längslenker gegenüber dem Fahrzeugaufbau führenden Scherenlenker, sowie einem den Längslenker gegenüber dem Fahrzeugaufbau abstützenden Federelement, wobei das Federelement an dem Längslenker in Richtung der Fahrzeuglängsachse betrachtet im Bereich der Anlenkung des Scherenlenkers am Längslenker angeordnet ist.
Der Scherenlenker ist dabei in einer seitlichen Projektion am Längslenker innerhalb der Felge angelenkt. In einer besonders vorteilhaften Weiterbildung kann der Scherenlenker in einer seitlichen Projektion insgesamt innerhalb der Felge angeordnet sein bzw. in diesem Felgen-Innenraum (jeduch nur bei Betrachtung in seitlicher Projektion !) liegen.

Die Anlenkung eines Scherenlenkers an einem Längslenker einer Einzelradaufhängung nutzt optimal den am zugehörigen Rad zur Verfügung stehenden Raum. Die Anlenkung ist so ausgebildet, dass sie sich in einem von der Felge gebildet Hohlraum oder in unmittelbarer seitlicher Projektion dieses Hohlraums befindet. Damit kann der Scherenlenker ebenfalls in diesem Bereich angeordnet werden, wodurch er sich besonders vorteilhaft in den zur Verfügung stehenden Bauraum einfügt. Die Folge sind eine besonders kompakte Bauweise verbunden mit kurzen Hebellängen und geringen Querkrafteinwirkungen. Darüber hinaus hat die Bauweise positive Auswirkung auf den Fahrzeugaufbau und ermöglicht dort insbesondere ein besonders kleines Volumen des Radkastens.
Mit der derartigen Gestaltung des Scherenlenkers ist insgesamt eine kompakte Bauweise geschaffen, die dennoch eine ausreichende Auslenkung des Längslenkers ermöglicht.Ferner führt diese Gestaltung zu einer vorteilhaften Abstützung des Längslenkers, wobei an diesem insbesondere geringe Biegekräfte wirken. Dabei werden die Führung mittels des Scherenlenkers und die Abstützkraft auf einen einzigen Krafteinleitungsbereich am Längslenker konzentriert.

Bei dem genannten Federelement kann es sich um eine Schraubenfeder handeln. Die Schraubenfeder ermöglicht es ein Federelement zu erhalten, das auf ein vergleichsweise kleines und im Wesentlichen kubisches Volumen begrenzt ist. Dabei kann das Federelement in einer seitlichen Projektion insgesamt innerhalb der Felge angeordnet sein. Mit der derartigen Gestaltung ist insgesamt eine kompakte Bauweise geschaffen, die dennoch eine präzise Führung bei gleichzeitig ausreichender Auslenkung und federnder Abstützung des Längslenkers ermöglicht.

Bei der Einzelradaufhängung gemäß der Erfindung ist vorzugsweise auch ein den Längslenker gegenüber dem Fahrzeugaufbau abstützender Dämpfer vorgesehen, der an dem Längslenker in Richtung der Fahrzeuglängsachse betrachtet im Bereich hinter dem Scherenlenker angeordnet ist.
Die derartige Anordnung eines den Längslenker am Fahrzeugaufbau abstützenden Dämpfers führt ebenfalls zu einer sehr kompakten Bauweise. Sie ermöglicht zugleich einen langen Bewegungsweg für den Dämpfer und erlaubt den Einsatz eines besonders schlanken Dämpferkörpers.

Die geringfügige Beweglichkeit des Scherenlenkers in Richtung der Fahrzeuglängsachse und insbesondere auch die Führung des Längslenkers in Richtung der Fahrzeugquerachse ist bevorzugt mit einer am Fahrzeugaufbau angelenkten Pendelabstützung geschaffen.

Mit dieser Weiterbildung ist der Scherenlenker von einer Pendelabstützung geführt, die ihrerseits am Fahrzeugaufbau angelenkt ist. Die Pendelabstützung erstreckt sich insbesondere im Wesentlichen vertikal. Sie kann dabei in Richtung der Fahrzeuglängsachse pendeln und erlaubt damit eine geringfügige Bewegung des Scherenlenkers in Richtung der Fahrzeuglängsachse. Auf diese Weise kann der Scherenlenker wie oben bereits erwähnt den Versatz ausgleichen, den er erfährt, wenn der Längslenker beim Ein- und Ausfedern des Rades im Wesentlichen um die Fahrzeugquerachse geschwenkt wird.

Der Längslenker der erfindungsgemäßen Einzelradaufhängung würde beim Ein- und Ausfedern des zugehörigen Rades aufgrund der zentral wirkenden Gewichtskraft des Fahrzeugaufbaus und der dazu seitlich versetzten Aufstandsfläche des Rades in Richtung der Fahrzeugquerachse nach außen wandern und sich gegebenenfalls um die Fahrzeuglängsachse drehen. Eine dieser sonst eintretenden Bewegung des Längslenkers entgegenwirkende Führung kann vorteilhaft mit einer Pendelabstützung geleistet werden, die einerseits am Fahrzeugaufbau und andererseits an dem Scherenlenker angelegt ist. Der Scherenlenker ist dann seinerseits am Längslenker angelenkt. Die Pendelabstützung kann vorteilhaft mit zwei Pendelarmen gestaltet sein, von denen einer in Form eines Dreiecks gestaltet sein kann und mit seinen drei Anlenkpunkten damit auch ein Drehmoment quer zur Pendelbewegung aufnehmen kann.

Alternativ ist die geringfügige Beweglichkeit des Scherenlenkers in Richtung der Fahrzeuglängsachse und insbesondere auch die Führung des Längslenkers in Richtung der Fahrzeugquerachse mit einer am Fahrzeugaufbau angelenkten kardanischen Abstützung geschaffen.

Eine kardanische Abstützung bzw. Aufhängung ist eine Einrichtung, um einen Gegenstand in zwei zueinander weitestgehend rechtwinkligen Achsen drehbar zu lagern. Die erfindungsgemäß verwendete kardanische Abstützung stellt eine sehr kompakte Bauform für die Einzelradaufhängung dar. Sie ermöglicht eine geringfügige Verschiebbarkeit der Anlenkung des Scherenlenkers in Richtung der Fahrzeuglängsachse. Zugleich stützt sie ein Drehmoment des Längslenkers um die Fahrzeuglängsachse ab. Sie verhindert also insbesondere ein Verdrehen des Längslenkers um dessen Längsachse. Dazu ist die kardanische Abstützung vorzugsweise mit zwei Achsen gestaltet, die zueinander weitestgehend senkrecht und im Wesentlichen quer zur Fahrzeuglängsachse ausgerichtet sind. Besonders bevorzugt ist die kardanische Abstützung mit einem kardanischen Ring gestaltet, der mit zwei sich im Wesentlichen in Fahrzeugquerrichtung erstreckenden Armen geringfügig in Fahrzeuglängsrichtung verschiebbar gehalten ist. Der Ring ist dabei im Wesentlichen um die Fahrzeuglängsachse drehfest gelagert. In dem Ring befindet sich eine Querachse, mit der der Scherenlenker angelenkt ist. Der Scherenlenker ist damit um die Fahrzeuglängsachse drehfest gelagert und mit ihm der Längslenker. Dennoch ist der Scherenlenker in Fahrzeuglängsrichtung geringfügig beweglich. Auf diese Weise ist sehr vorteilhaft das Schwenken des erfindungsgemäßen Längslenkers an dem Fahrzeugaufbau in Richtung der Fahrzeugquerachse und auch in Richtung der Fahrzeughochachse geführt.

Mit der oben genannten kardanischen Abstützung ist vorzugsweise auch eine Führung des Längslenkers in Richtung der Fahrzeugquerachse geschaffen. Dazu ist besonders bevorzugt eine der beiden Achsen der kardanischen Abstützung im Wesentlichen in Richtung der Fahrzeughochachse ausgerichtet. Mit dieser Achse ist der Scherenlenker und mit ihm der Längslenker seitlich gehalten. Ferner ist vorzugsweise die weitere Achse der kardanischen Abstützung im Wesentlichen in Richtung der Fahrzeugquerachse ausgerichtet. Mit dieser Achse kann der daran angelenkte Scherenlenker auf und ab schwenken und auch dabei den Längslenker führen.

Die Pendelabstützung oder die kardanische Abstützung ist mit anderen Worten vorzugsweise am Scherenlenker mittels einer Schwenkachse abgestützt, die sich im Wesentlichen in Richtung der Fahrzeugquerachse erstreckt. Der Winkel dieser Schwenkachse ist zur Fahrzeugquerachse vorteilhaft in der Ebene Fahrzeuglängsachse/Fahrzeugquerachse in einem Bereich zwischen -10° (Winkel von der Fahrzeugquerachse nach hinten gerichtet) und +6° (Winkel von der Fahrzeugquerachse nach vorne gerichtet), bevorzugt zwischen -5° und +1°, besonders bevorzugt zwischen -3° und -1° gewählt. Ferner ist der Winkel dieser Schwenkachse zur Fahrzeugquerachse vorzugsweise in der Ebene Fahrzeughochachse/Fahrzeugquerachse in einem Bereich zwischen +15° (Winkel von der Fahrzeugquerachse nach unten gerichtet) und -15° (Winkel von der Fahrzeugquerachse nach oben gerichtet), bevorzugt zwischen -10° und +10°, besonders bevorzugt zwischen -5° und +5° gewählt.
Ferner ist die Pendelabstützung bzw. die kardanische Abstützung vorzugsweise in einer seitlichen Projektion insgesamt innerhalb der Felge angeordnet.
Mit der derartigen Gestaltung ist insgesamt eine kompakte Bauweise geschaffen, die dennoch eine präzise Führung bei gleichzeitig ausreichender Auslenkung des Längslenkers ermöglicht.

Zur Führung des Längslenkers in Richtung der Fahrzeughochachse ist vorteilhaft der Scherenlenker an einer sich im Wesentlichen in Richtung der Fahrzeugquerachse erstreckenden Schwenkachse an dem Längslenker angelenkt.

Die sich in Richtung der Fahrzeugquerachse erstreckende Schwenkachse des Scherenlenkers am Längslenker nimmt das im Wesentlichen um die Längsachse des Längslenkers wirkende Drehmoment bzw. Kippmoment auf, welches entsteht, wenn der Längslenker einerseits von der Aufstandskraft des Rades und andererseits von der Gewichtskraft des Fahrzeugs belastet wird. Der Winkel dieser Schwenkachse zur Fahrzeugquerachse ist vorteilhaft in der Ebene Fahrzeuglängsachse/Fahrzeugquerachse in einem Bereich zwischen -9° (Winkel von der Fahrzeugquerachse nach hinten gerichtet) und +3° (Winkel von der Fahrzeugquerachse nach vorne gerichtet), bevorzugt zwischen -6° und 0°, besonders bevorzugt zwischen -4° und 0° gewählt. Der Winkel der Schwenkachse zur Fahrzeugquerachse ist vorteilhaft in der Ebene Fahrzeughochachse/Fahrzeugquerachse in einem Bereich zwischen +3° (Winkel von der Fahrzeugquerachse nach unten gerichtet) und -2° (Winkel von der Fahrzeugquerachse nach oben gerichtet), bevorzugt zwischen +2° und -1 °, besonders bevorzugt zwischen +1° und 0° gewählt.

Bei den Winkelangaben befinden sich die Scheitelpunkte der Winkel jeweils an der Innenseite des Fahrzeugs und die Winkel sind jeweils zur Außenseite des Fahrzeugs hin geöffnet.

Die Anlenkung des Längslenkers am ersten Endbereich an dem Fahrzeugaufbau ist bevorzugt mittels einer eine elastokinematische Relativbewegung erlaubenden Elastomerlagerung geschaffen.

Die derartige Elastomerlagerung ermöglicht eine Schwenkbewegung des Längslenkers in Richtung der Fahrzeughochachse und ferner zumindest einen geringfügigen Freiheitsgrad in Richtung der Fahrzeugquerachse. In Richtung der Fahrzeuglängsachse ist der Längslenker hingegen für seine Schwenkbewegung auf und ab am Fahrzeug im Wesentlichen ortsfest gehalten.

Nachfolgend werden Ausführungsbeispiele der erfindungsgemäßen Lösung anhand der beigefügten schematischen Zeichnungen näher erläutert. Es zeigt:
- Fig. 1: eine erste perspektivische Ansicht einer ersten erfindungsgemäßen Einzelradaufhängung,
- Fig. 2: eine zweite perspektivische Ansicht der Einzelradaufhängung gemäß Fig. 1,
- Fig. 3: eine Seitenansicht von innen der Einzelradaufhängung gemäß Fig. 1,
- Fig. 4: eine Vorderansicht der Einzelradaufhängung gemäß Fig. 1,
- Fig. 5: eine Draufsicht der Einzelradaufhängung gemäß Fig. 1,
- Fig. 6: eine Rückansicht der Einzelradaufhängung gemäß Fig. 1,
- Fig. 7: eine Unteransicht der Einzelradaufhängung gemäß Fig. 1,
- Fig. 8: eine perspektivische Ansicht eines Längslenkers der Einzelradaufhängung gemäß Fig. 1,
- Fig. 9: eine perspektivische Ansicht eines Scherenlenkers der Einzelradaufhängung gemäß Fig. 1,
- Fig. 10: eine perspektivische Ansicht einer Pendelstütze der Einzelradaufhängung gemäß Fig. 1,
- Fig. 11: eine perspektivische Ansicht eines Spurlenkers der Einzelradaufhängung gemäß Fig. 1,
- Fig. 12: eine erste perspektivische Ansicht einer zweiten erfindungsgemäßen Einzelradaufhängung,
- Fig. 13: eine zweite perspektivische Ansicht der Einzelradaufhängung gemäß Fig. 12,
- Fig. 14: eine Seitenansicht von innen der Einzelradaufhängung gemäß Fig. 12,
- Fig. 15: eine Vorderansicht der Einzelradaufhängung gemäß Fig. 12,
- Fig. 16: eine Draufsicht der Einzelradaufhängung gemäß Fig. 12,
- Fig. 17: eine Rückansicht der Einzelradaufhängung gemäß Fig. 12,
- Fig. 18: eine Unteransicht der Einzelradaufhängung gemäß Fig. 12,
- Fig. 19: eine perspektivische Ansicht eines Längslenkers der Einzelradaufhängung gemäß Fig. 12,
- Fig. 20: eine perspektivische Ansicht eines Scherenlenkers der Einzelradaufhängung gemäß Fig. 12,
- Fig. 21: eine perspektivische Ansicht eines kardanischen Rings der Einzelradaufhängung gemäß Fig. 12 und
- Fig. 22: eine perspektivische Ansicht einer Kardanstütze der Einzelradaufhängung gemäß Fig. 12.

In den Figuren sind Ausführungsbeispiele einer Einzelradaufhängung 10 für ein Rad 12 eines weiter nicht dargestellten Personenkraftwagens dargestellt. Das Rad 12 umfasst einen Reifen 14, der auf einer Felge 16 aufgezogen ist. Der Personenkraftwagen weist dabei einen Fahrzeugaufbau bzw. einer Karosserie (nicht dargestellt) auf, bewegt sich in einer mit einem Pfeil veranschaulichten Hauptfahrtrichtung 18 und erstreckt sich entlang einer Fahrzeuglängsachse 20, einer Fahrzeugquerachse 22 und einer Fahrzeughochachse 24.

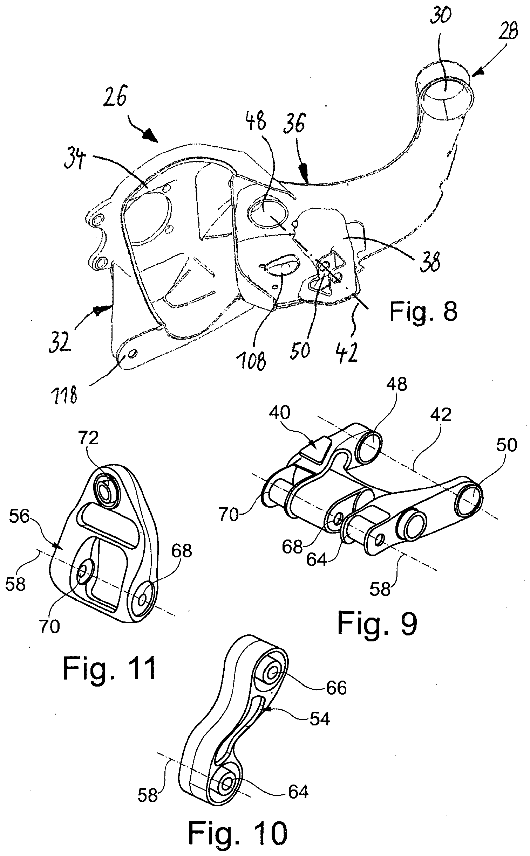

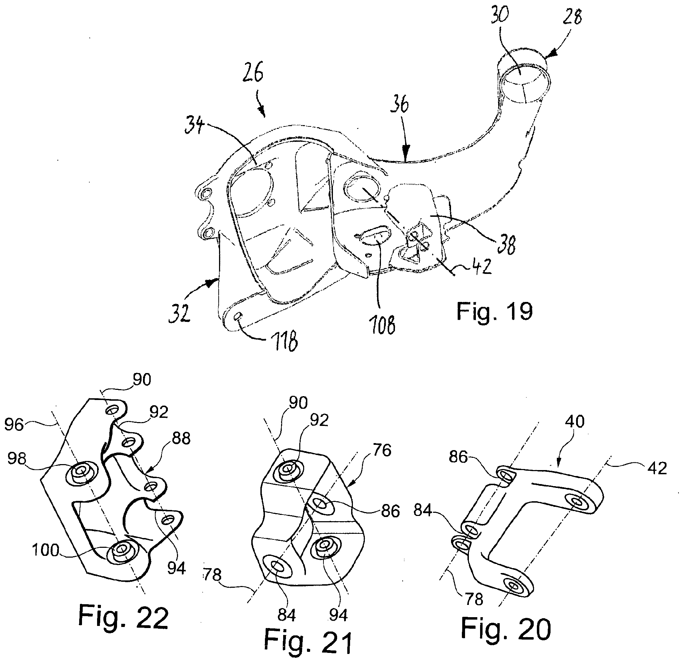

Die Einzelradaufhängung 10 ist mit einem Längslenker 26 gestaltet (siehe insbesondere Fig. 8 und 19), der im Wesentlichen stabförmig bzw. pfannenförmig gestaltet ist und dabei einen in Hauptfahrtrichtung vorderen Endbereich 28 aufweist. Am vorderen Endbereich 28 befindet sich ein Lager 30, das als Elastomerlagerung gestaltet ist und mit dem der Längslenker 26 am zugehörigen Fahrzeugaufbau schwenkbar gelagert ist. Die Elastomerlagerung erlaubt eine elastokinematische Schwenkbewegung des Längslenkers 26 insbesondere in Richtung der Fahrzeughochachse 24 und ferner zumindest einen geringfügigen Freiheitsgrad in Richtung der Fahrzeugquerachse 22. In Richtung der Fahrzeuglängsachse 20 ist der Längslenker 26 für seine Schwenkbewegung am Fahrzeugaufbau im Wesentlichen ortsfest gehalten.

An einem zugehörigen hinteren Endbereich 32 des Längslenkers 26 ist ein Radträger 34 ausgebildet, mit dem das Rad 12 drehbar um eine Radachse (nicht dargestellt) gelagert ist, die sich im Wesentlichen parallel zur Fahrzeugquerachse 22 erstreckt. An einem zwischen dem vorderen Endbereich 28 und dem hinteren Endbereich 32 liegenden Mittelbereich 36 des Längslenkers 26, der auch als Hauptarm des Längslenkers 26 bezeichnet werden kann, befindet sich von diesem seitlich abstehend ein Seitenarm 38.

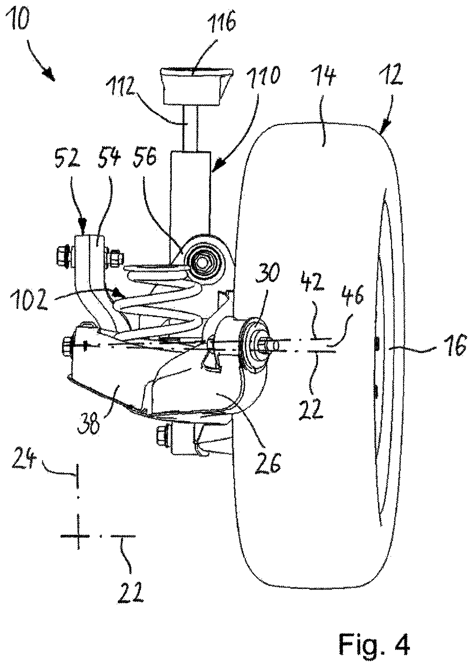

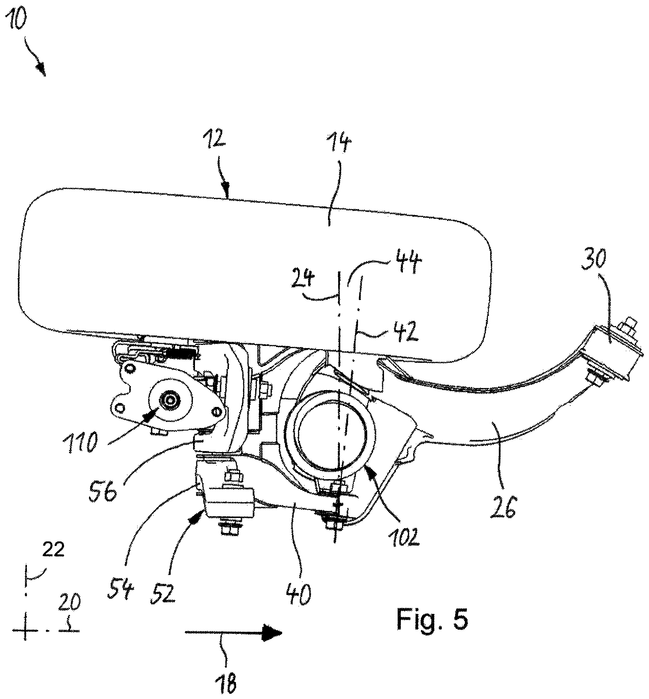

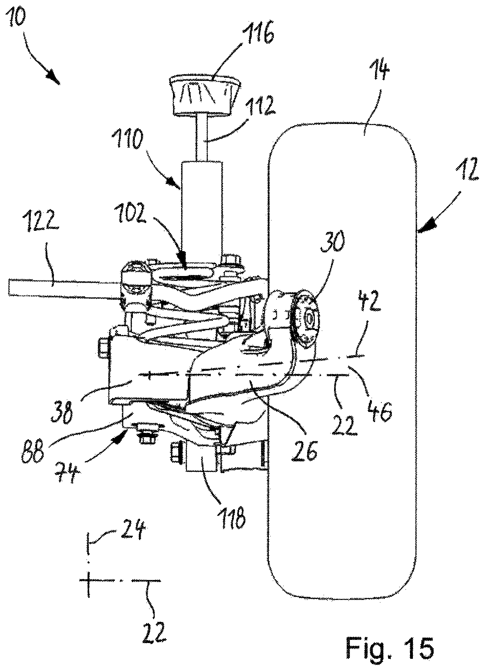

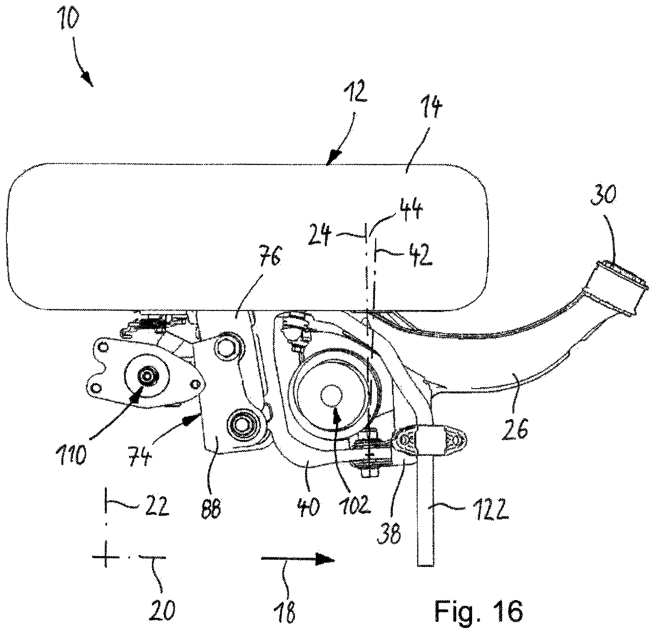

An dem Seitenarm 38 ist ein Scherenlenker 40 (siehe insbesondere Fig. 9 und 20) mittels einer Schwenkachse 42 angelenkt. Die Schwenkachse 42 erstreckt sich in einem Winkel 44 (siehe Fig. 5 und 16) von -3° zur Fahrzeugquerachse 22 in der von der Fahrzeuglängsachse 20 und der Fahrzeugquerachse 22 gebildeten Ebene. Ferner erstreckt sich die Schwenkachse 42 in einem Winkel 46 (siehe Fig. 4 und 15) von +1° zur Fahrzeugquerachse 22 in der von der Fahrzeughochachse 24 und der Fahrzeugquerachse 22 gebildeten Ebene. Die Schwenkachse 42 ist mit einem ersten Schwenkpunkt 48 des Scherenlenkers 40 gebildet, der als eine Achslagerung direkt am Hauptarm des Längslenkers 26 ausgebildet ist. Daneben ist die Schenkachse 42 mit einem zweiten Schwenkpunkt 50 definiert, der ebenfalls als eine Achslagerung am Endbereich des Seitenarms 38 ausgeformt ist.

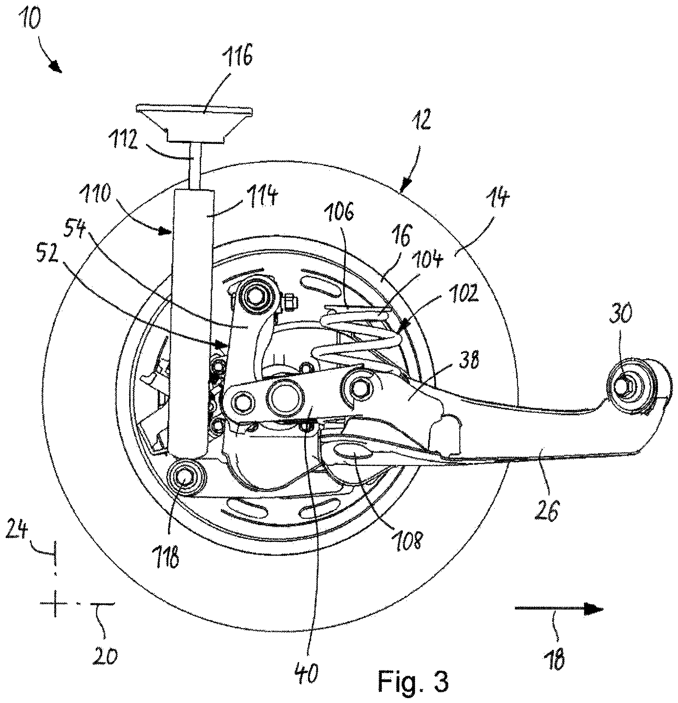

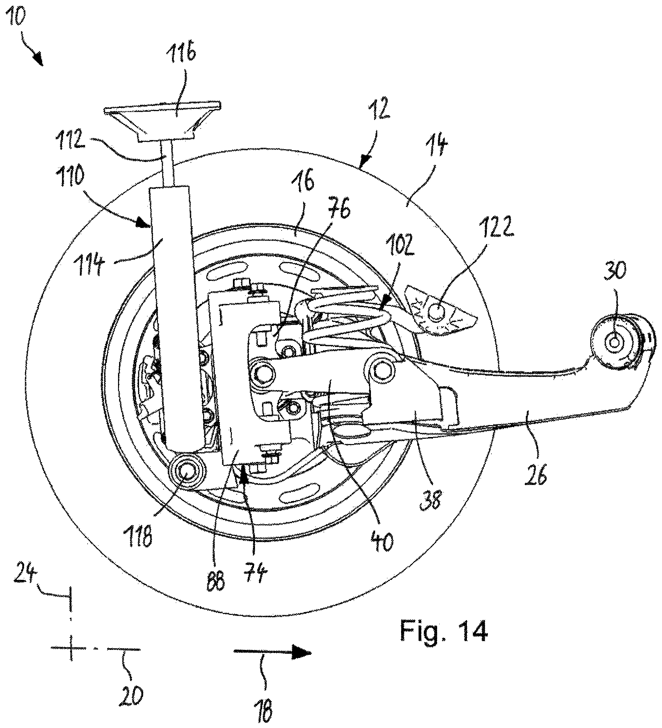

Der derart am Längslenker 26 angelenkte Scherenlenker 40 ist an dem Fahrzeugaufbau in Richtung der Fahrzeuglängsachse 20 geringfügig beweglich und dennoch den Längslenker 26 in Richtung der Fahrzeugquerachse 22 und der Fahrzeughochachse 24 führend angelenkt. Zugleich ist der Scherenlenker 40 so angelenkt, dass er in einer seitlichen Projektion (also in Projektion in Richtung der Fahrzeugquerachse 22, siehe insbesondere Fig. 3 und 14) am Längslenker 26 innerhalb der Felge 16 angelenkt ist. Dabei ist der Scherenlenker 40 selbst ferner so gestaltet, dass er in der seitlichen Projektion insgesamt innerhalb der Felge 16 angeordnet ist.

Auf diese Weise ist eine besonders kompakte Bauform geschaffen, die es insbesondere ermöglicht am zugehörigen Fahrzeugaufbau einen sehr kleinen Radkasten vorzusehen. Darüber hinaus ergibt sich mit dieser Gestaltung und Anlenkung des Scherenlenkers 40 eine vorteilhafte Radführung, insbesondere da der Längslenker 26 an seinem in Hauptfahrtrichtung 18 vorderen Endbereich 28 am Fahrzeugaufbau festgelegt angelenkt ist und von dort aus wie eine Radschwinge in Richtung der Fahrzeughochachse 24 ausschwenken kann. Diese Schwenkbewegung wird von dem Scherenlenker 40 geführt, der zugleich sehr klein und kompakt gestaltet ist. Damit ist der Im Zentrum des Rades 12 zur Verfügung stehenden Raum optimal genutzt. Mit der kompakten Bauweise ergeben sich auch kurze Hebellängen, die zu besonders geringen Querkrafteinwirkungen führen.

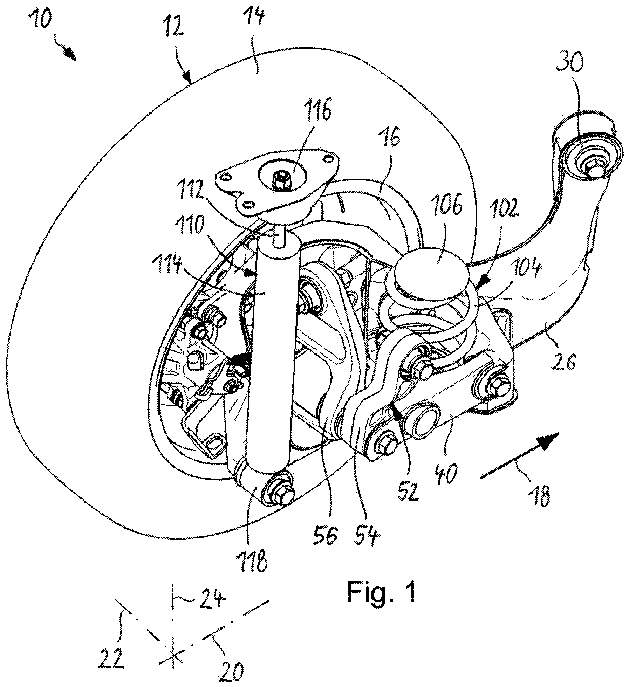

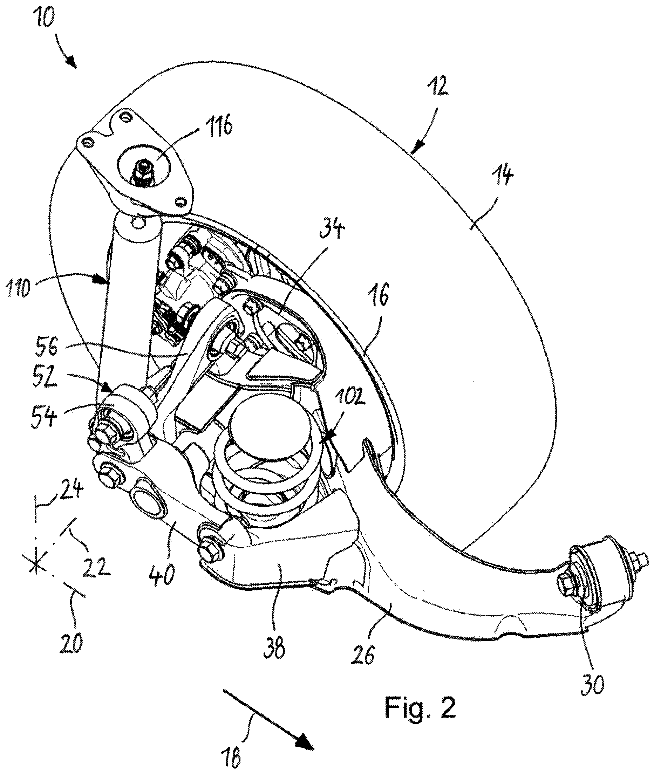

Damit der Scherenlenker 40 in Richtung der Fahrzeuglängsachse 20 geringfügig beweglich gelagert ist, ist bei der Einzelradaufhängung 10 gemäß den Fig. 1 bis 11 eine Pendelabstützung 52 vorgesehen, die den dortigen Scherenlenker 40 mit dem zugehörigen Fahrzeugaufbau verbindet. Mit der Pendelabstützung 52 ist der Scherenlenker 40 an seinem hinteren Ende in vertikaler Richtung gehalten. Dabei kann der Scherenlenker 40 zugleich um die Fahrzeugquerachse 22 schwenken und sich in Richtung der Fahrzeuglängsachse 20 verschieben, um den Versatz ausgleichen, den er beim Bewegen des Längslenkers 26 erfährt. Mit der Pendelabstützung 52 sind der Scherenlenker 40 und damit der Längslenker 26 zugleich in Richtung der Fahrzeugquerachse 22 geführt. Der Längslenker 26 kann sich also nicht um seine Längsachse drehen, was er sonst aufgrund der auf ihn einwirkenden Kräfte (Gewichtskraft des Fahrzeugs und Aufstandskraft des Rades 12) tun würde.

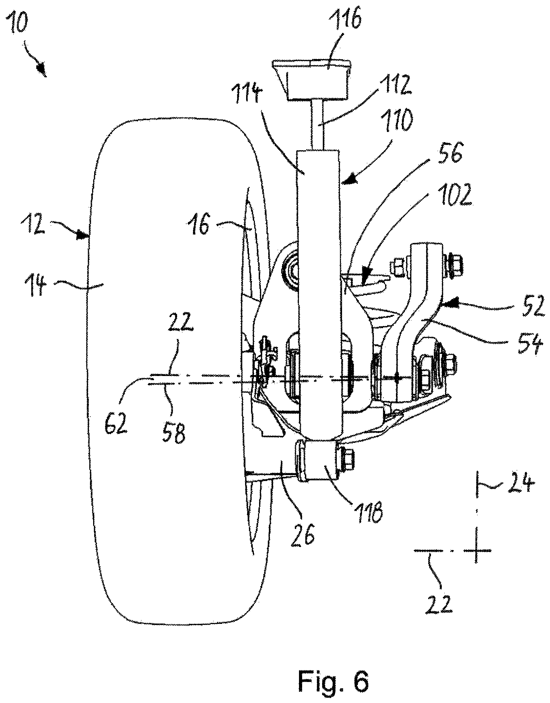

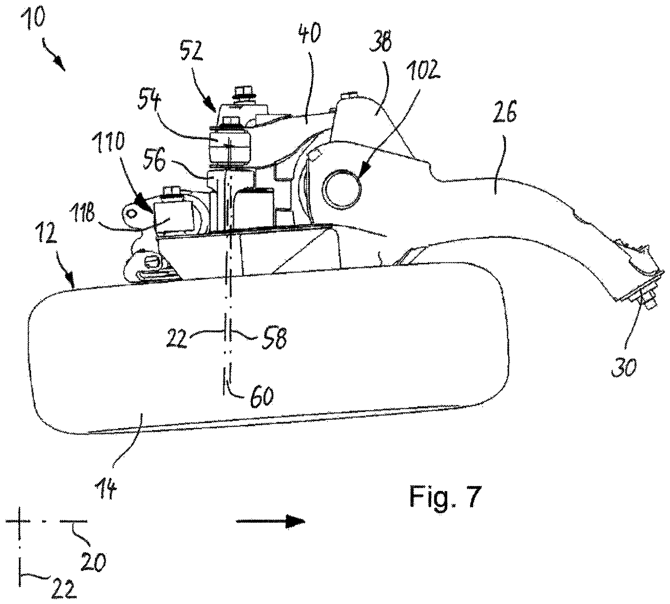

Die Pendelabstützung 52 ist mit einer Pendelstütze 54 (siehe Fig. 10) und einem Spurlenker 56 (siehe Fig. 11) gestaltet, die an einer Schwenkachse 58 an dem Scherenlenker 40 schwenkbar angelenkt sind. Die Schwenkachse 58 erstreckt sich in einem Winkel 60 (siehe Fig. 7) von -3,5° zur Fahrzeugquerachse 22 in der von der Fahrzeuglängsachse 20 und der Fahrzeugquerachse 22 gebildeten Ebene. Ferner erstreckt sich die Schwenkachse 58 in einem Winkel 62 (siehe auch Fig. 6) von -2° zur Fahrzeugquerachse 22 in der von der Fahrzeughochachse 24 und der Fahrzeugquerachse 22 gebildeten Ebene. Die Pendelstütze 54 ist mit einem ersten, als Elastomerlagerung gestalteten Schwenkpunkt 64 an dem Scherenlenker 40 und mit einem zweiten, ebenfalls als Elastomerlagerung gestalteten Schwenkpunkt 66 an dem Fahrzeugaufbau angelenkt. Der Spurlenker 56 ist im Wesentlichen dreieckig gestaltet und dabei mit einem ersten unteren, als Achslagerung gestalteten Schwenkpunkt 68 sowie einem zweiten unteren, ebenfalls als Achslagerung gestalteten Schwenkpunkt 70 an dem Scherenlenker 40 angelenkt. Ein dritter, als Elastomerlagerung gestalteter Schwenkpunkt 72 ist vorgesehen, um den Spurlenker 56 in seinem oberen Bereich schwenkbar an dem Fahrzeugaufbau anzulenken.

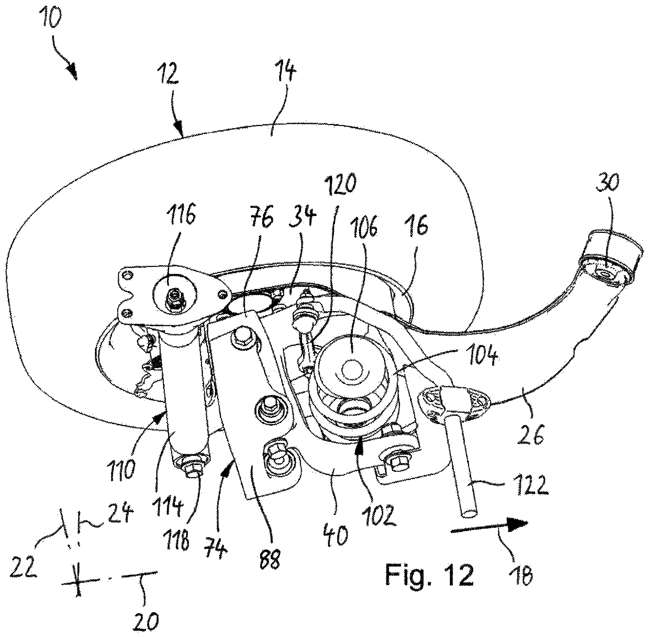

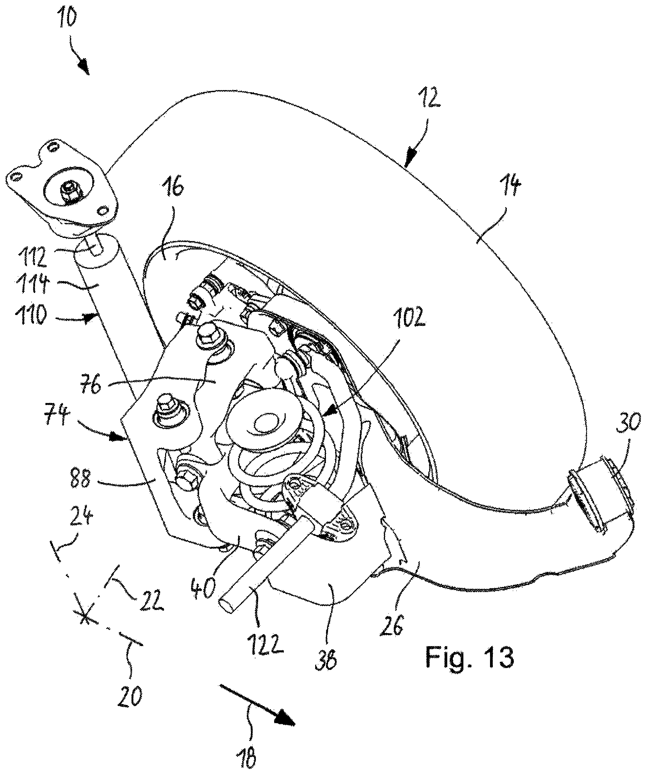

In den Fig. 12 bis 22 ist eine Einzelradaufhängung 10 dargestellt, bei der die geringfügige Beweglichkeit des Scherenlenkers 40 in Richtung der Fahrzeuglängsachse 20 mit einer am Fahrzeugaufbau angelenkten kardanischen Abstützung 74 geschaffen ist. Die kardanische Abstützung 74 stützt zugleich jenes Drehmoment des Längslenkers 26 um die Fahrzeuglängsachse 20 ab, das dieser aufgrund der an ihm wirkenden Kräfte erfährt, und führt den Längslenker 26 dabei in Richtung der Fahrzeugquerachse 22.

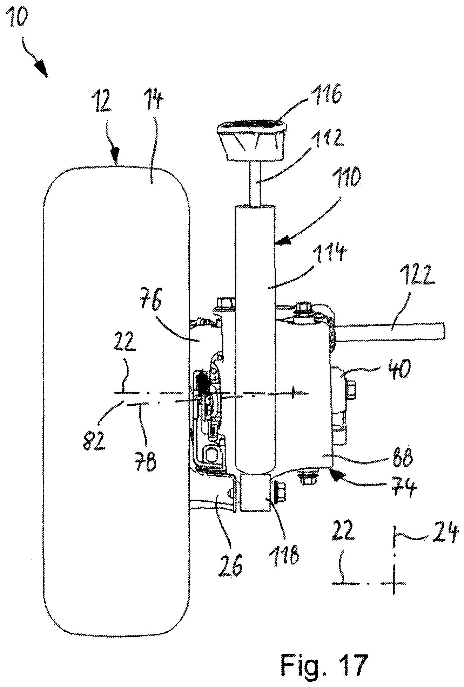

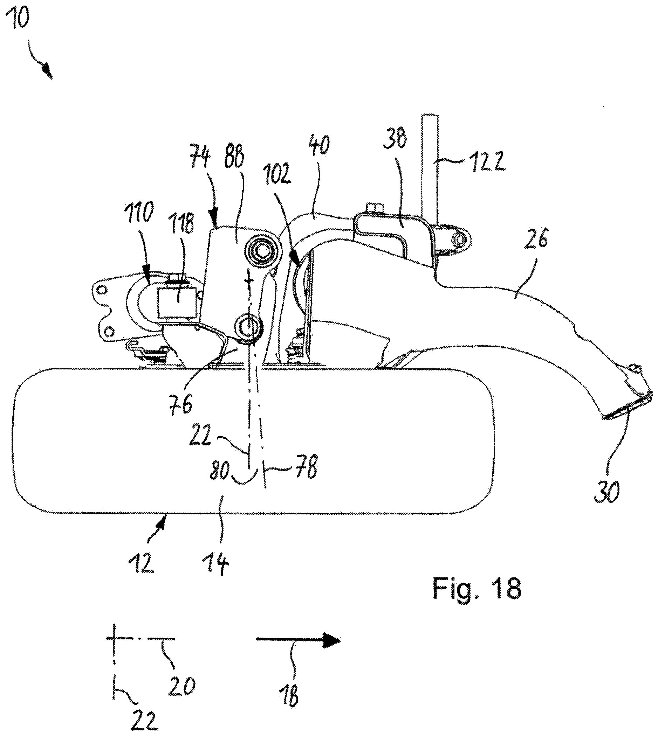

Die kardanische Abstützung 74 ist mit einem kardanischen Ring 76 gestaltet, der mit einer Schwenkachse 78 an dem zugehörigen Scherenlenker 40 angelenkt ist. Die Schwenkachse 78 erstreckt sich in einem Winkel 80 (siehe Fig. 18) von -3,5° zur Fahrzeugquerachse 22 in der von der Fahrzeuglängsachse 20 und der Fahrzeugquerachse 22 gebildeten Ebene. Ferner erstreckt sich die Schwenkachse 78 in einem Winkel 82 (siehe Fig. 17) von -2° zur Fahrzeugquerachse 22 in der von der Fahrzeughochachse 24 und der Fahrzeugquerachse 22 gebildeten Ebene. Dabei ist am kardanischen Ring 76 an einer Seite ein erster Schwenkpunkt 84 vorgesehen, der als Achslagerung gestaltet ist und gegenüberliegend ein zweiter, ebenfalls als Achslagerung gestalteter Schwenkpunkt 86. Zum Abstützen des kardanischen Rings 76 gegenüber dem Fahrzeugaufbau ist eine Kardanstütze 88 vorgesehen, die sich im Wesentlichen in Form einer rechteckigen Platte in der von der Fahrzeughochachse 24 und der Fahrzeugquerachse 22 gebildeten Ebene erstreckt. Die Kardanstütze 88 ist mittels einer Schwenkachse 90 an dem kardanischen Ring 76 angelenkt, die sich im Wesentlichen in Richtung der Fahrzeughochachse 24 und damit im Wesentlichen im rechten Winkel zur Schwenkachse 78 erstreckt. Dabei weist die Kardanstütze 88 einen ersten Schwenkpunkt 92 und einen zweiten Schwenkpunkt 94 auf.

Am Fahrzeugaufbau ist die Kardanstütze 88 mit einer Schwenkachse 96 schwenkbar angelenkt, die sich ebenfalls im Wesentlichen in Richtung der Fahrzeughochachse 24 erstreckt und von einem dritten Schwenkpunkt 98 sowie einem vierten Schwenkpunkt 100 gebildet ist. Die Schwenkpunkte 98 und 100 sind beide als Elastomerlagerung gestaltet.

Die Pendelabstützung 52 gemäß den Fig. 1 bis 11 und die kardanische Abstützung gemäß den Fig. 12 bis 22 sind beide in der seitlichen Projektion insgesamt innerhalb der zugehörigen Felge 16 angeordnet. Auf diese Weise ist eine sehr kompakte Bauweise geschaffen, die dennoch eine präzise Führung bei gleichzeitig ausreichender Auslenkung des jeweiligen Längslenkers 26 ermöglicht.

An den dargestellten Einzelradaufhängungen 10 ist ferner jeweils ein Federelement 102 vorgesehen, das mit einer Schraubenfeder 104 gebildet ist. Das Federelement 102 ist an dem zugehörigen Längslenker 26 in Richtung der Fahrzeuglängsachse 20 betrachtet im Bereich der Anlenkung des Scherenlenkers 40 angeordnet. In Richtung der Fahrzeuglängsachse 20 betrachtet also im Mittelbereich 36 bzw. auf Höhe des Seitenarms 38 des Längslenkers 26. Mit dieser Gestaltung ist die Bauweise der jeweiligen Einzelradaufhängung 10 besonders kompakt gehalten und der Längslenker 26 ist besonders vorteilhaft mittig abgestützt, so dass geringe Biegekräfte wirken. Die Schraubenfeder 104 kann dabei derart bemessen werden, dass das Federelement 102 sehr kompakt in der seitlichen Projektion insgesamt innerhalb der Felge 16 angeordnet ist (siehe Fig. 3 und 14).

Zur Dämpfung der Federbewegung des Längslenkers 26 ist an den dargestellten Einzelradaufhängungen 10 jeweils ein Dämpfer 110 vorgesehen, der mit einem Dämpferkolben 112 und einem Dämpferzylinder 114 gebildet ist. Der Dämpferkolben 112 ist in dem Dämpferzylinder 114 verschiebbar gelagert und dabei mittels einer oberen Anlenkung 116 am Fahrzeugaufbau angelenkt, während der Dämpferzylinder 114 mit einer unteren Anlenkung 118 an dem hintersten Endbereich des Längslenkers 26 angelenkt ist. Der Dämpfer 110 befindet sich damit in Richtung der Fahrzeuglängsachse betrachtet in für den Hubweg des Dämpferkolbens 112 besonders vorteilhafter Weise im Bereich hinter dem Scherenlenker 40.

Abschließend sei angemerkt, dass am Längslenker 26 gemäß den Fig. 12 bis 18 im Bereich der Anlenkung des Scherenlenkers 40 sowie des Federelements 102 ferner mittels einer Pendelstange 120 ein Drehstabilisator 122 angelenkt sein kann.

### Bezugszeichenliste

- 10: Einzelradaufhängung
- 12: Rad
- 14: Reifen
- 16: Felge
- 18: Hauptfahrtrichtung
- 20: Fahrzeuglängsachse
- 22: Fahrzeugquerachse
- 24: Fahrzeughochachse
- 26: Längslenker
- 28: vorderer Endbereich des Längslenkers
- 30: Lager am vorderen Endbereich des Längslenkers
- 32: hinterer Endbereich des Längslenkers
- 34: Radträger am hinteren Endbereich des Längslenkers
- 36: Mittelbereich des Längslenkers
- 38: Seitenarm am Längslenker
- 40: Scherenlenker
- 42: Schwenkachse des Scherenlenkers am Längslenker
- 44: Winkel der Schwenkachse zur Fahrzeugquerachse in der Ebene Fahrzeuglängsachse/Fahrzeugquerachse
- 46: Winkel der Schwenkachse zur Fahrzeugquerachse in der Ebene Fahrzeughochachse/Fahrzeugquerachse
- 48: erster Schwenkpunkt des Scherenlenkers
- 50: zweiter Schwenkpunkt des Scherenlenkers
- 52: Pendelabstützung
- 54: Pendelstütze
- 56: Spurlenker
- 58: Schwenkachse der Pendelstütze und des Spurlenkers am Scherenlenker
- 60: Winkel der Schwenkachse zur Fahrzeugquerachse in der Ebene Fahrzeuglängsachse/Fahrzeugquerachse
- 62: Winkel der Schwenkachse zur Fahrzeugquerachse in der Ebene Fahrzeughochachse/Fahrzeugquerachse
- 64: erster Schwenkpunkt der Pendelstütze
- 66: zweiter Schwenkpunkt der Pendelstütze
- 68: erster Schwenkpunkt des Spurlenkers
- 70: zweiter Schwenkpunkt des Spurlenkers
- 72: dritter Schwenkpunkt des Spurlenkers
- 74: kardanische Abstützung
- 76: kardanischer Ring
- 78: Schwenkachse des kardanischen Rings am Scherenlenker
- 80: Winkel der Schwenkachse zur Fahrzeugquerachse in der Ebene Fahrzeuglängsachse/Fahrzeugquerachse
- 82: Winkel der Schwenkachse zur Fahrzeugquerachse in der Ebene Fahrzeughochachse/Fahrzeugquerachse
- 84: erster Schwenkpunkt des kardanischen Rings
- 86: zweiter Schwenkpunkt des kardanischen Rings
- 88: Kardanstütze
- 90: Schwenkachse der Kardanstütze am kardanischen Ring
- 92: erster Schwenkpunkt der Kardanstütze
- 94: zweiter Schwenkpunkt der Kardanstütze
- 96: Schwenkachse der Kardanstütze am Fahrzeugaufbau
- 98: dritter Schwenkpunkt der Kardanstütze
- 100: vierter Schwenkpunkt der Kardanstütze
- 102: Federelement
- 104: Schraubenfeder
- 106: obere Abstützung am Fahrzeugaufbau
- 108: untere Abstützung am Längsträger
- 110: Dämpfer
- 112: Dämpferkolben
- 114: Dämpferzylinder
- 116: obere Anlenkung am Fahrzeugaufbau
- 118: untere Anlenkung am hintersten Endbereich des Längslenkers
- 120: Pendelstange
- 122: Drehstabilisator

## Patentansprüche

1. Einzelradaufhängung (10) eines Rades (12) eines zweispurigen Fahrzeugs mit einem Längslenker (26), der an einem (28) seiner beiden Endbereiche (28, 32) an einem Fahrzeugaufbau des Fahrzeugs angelenkt ist und an seinem anderen Endbereich (32) einen Radträger (34) stützt, sowie mit einem am Längslenker (26) angelenkten und den Längslenker (26) gegenüber dem Fahrzeugaufbau führenden Scherenlenker (40), und einem den Längslenker (26) gegenüber dem Fahrzeugaufbau abstützenden Federelement (102), welches an dem Längslenker (26) in Richtung der Fahrzeuglängsachse (20) betrachtet im Bereich der Anlenkung des Scherenlenkers (40) am Längslenker (26) angeordnet ist,
**dadurch gekennzeichnet, dass** der Scherenlenker (40) in einer seitlichen Projektion am Längslenker (26) innerhalb der Felge (16) angelenkt ist.

2. Einzelradaufhängung eines Rades nach Anspruch 1, wobei der Scherenlenker (40) in einer seitlichen Projektion insgesamt innerhalb der Felge (16) angeordnet ist oder liegt.

3. Einzelradaufhängung eines Rades nach Anspruch 1 oder 2, wobei das Federelement (102) in einer seitlichen Projektion insgesamt innerhalb der Felge (16) angeordnet ist oder liegt.

4. Einzelradaufhängung eines Rades nach einem der Ansprüche 1 bis 3, mit einem den Längslenker (26) gegenüber dem Fahrzeugaufbau abstützenden Dämpfer (110), der an dem Längslenker (26) in Richtung der Fahrzeuglängsachse (20) betrachtet im Bereich hinter dem Scherenlenker (40) angeordnet ist.

5. Einzelradaufhängung eines Rades nach einem der Ansprüche 1 bis 4, bei der eine geringfügige Beweglichkeit des Scherenlenkers (40) in Richtung der Fahrzeuglängsachse (20) und insbesondere auch eine Führung des Längslenkers (26) in Richtung der Fahrzeugquerachse (22) mit einer am Fahrzeugaufbau angelenkten Pendelabstützung (52) geschaffen ist.

6. Einzelradaufhängung eines Rades nach einem der Ansprüche 1 bis 4, bei der eine geringfügige Beweglichkeit des Scherenlenkers (40) in Richtung der Fahrzeuglängsachse (20) und insbesondere auch eine Führung des Längslenkers (26) in Richtung der Fahrzeugquerachse (22) mit einer am Fahrzeugaufbau angelenkten kardanischen Abstützung (74) geschaffen ist.

7. Einzelradaufhängung eines Rades nach Anspruch 5 oder 6,
bei dem die Pendelabstützung (52) bzw. die kardanische Abstützung (74) in einer seitlichen Projektion insgesamt innerhalb der Felge (16) angeordnet ist.

8. Einzelradaufhängung eines Rades nach einem der Ansprüche 1 bis 7, bei dem zur Führung des Längslenkers (26) in Richtung der Fahrzeughochachse (24) der Scherenlenker (40) an einer sich im Wesentlichen in Richtung der Fahrzeugquerachse (22) erstreckenden Schwenkachse (42) an dem Längslenker (26) angelenkt ist.

9. Einzelradaufhängung eines Rades nach einem der Ansprüche 1 bis 8, bei dem die Anlenkung des Längslenkers (26) am ersten Endbereich (28) an dem Fahrzeugaufbau mittels einer eine elastokinematische Relativbewegung erlaubenden Elastomerlagerung (30) geschaffen ist.

## Claims

1. An independent suspension (10) of a wheel (12) of a two-track vehicle, comprising a trailing arm (26), which is hinged at a first (28) of its two end regions (28, 32) to a vehicle body of the vehicle and which at its other end region (32) supports a wheel carrier (34), and comprising a scissor-like arm (40), which is hinged to the trailing arm (26) and which guides the trailing arm (26) relative to the vehicle body, and comprising a spring element (102) supporting the trailing arm (26) relative to the vehicle body, which spring element is arranged on the trailing arm (26) in the region of the hinging of the scissor-like arm (40) to the trailing arm (26) as considered in the direction of the vehicle longitudinal axis (20),
**characterised in that** the scissor-like arm (40) is hinged to the trailing arm (26) within the rim (16) in a lateral projection.

2. An independent suspension of a wheel according to claim 1, wherein the scissor-like arm (40) is arranged or lies as a whole within the rim (16) in a lateral projection.

3. An independent suspension of a wheel according to claim 1 or 2, wherein the spring element (102) is arranged or lies as a whole within the rim (16) in a lateral projection.

4. An independent suspension of a wheel according to any one of claims 1 to 3, comprising a damper (110), which supports the trailing arm (26) relative to the vehicle body and which is arranged on the trailing arm (26) in the region behind the scissor-like arm (40) as considered in the direction of the vehicle longitudinal axis (20).

5. An independent suspension of a wheel according to any one of claims 1 to 4, in which a slight movability of the scissor-like arm (40) in the direction of the vehicle longitudinal axis (20) and more especially also a guidance of the trailing arm (26) in the direction of the vehicle transverse axis (22) are created with a pendulum support (52) hinged to the vehicle body.

6. An independent suspension of a wheel according to any one of claims 1 to 4, in which a slight movability of the scissor-like arm (40) in the direction of the vehicle longitudinal axis (20) and more especially also a guidance of the trailing arm (26) in the direction of the vehicle transverse axis (22) are created with a cardanic support (74) hinged to the vehicle body.

7. An independent suspension of a wheel according to claim 5 or 6, in which the pendulum support (52) or the cardanic support (74) is arranged as a whole within the rim (16) in a lateral projection.

8. An independent suspension of a wheel according to any one of claims 1 to 7, in which, in order to guide the trailing arm (26) in the direction of the vehicle vertical axis (24), the scissor-like arm (40) is hinged to the trailing arm (26) at a pivot pin (42) extending substantially in the direction of the vehicle transverse axis (22).

9. An independent suspension of a wheel according to any one of claims 1 to 8, in which the hinging of the trailing arm (26) at the first end region (28) to the vehicle body is created by means of an elastomer bearing (30) allowing an elastokinematic relative movement.

## Revendications

1. Suspension individuelle (10) d'une roue (12) d'un véhicule à deux lignes de roues comprenant un bras de suspension longitudinal (26) qui est articulé sur la caisse du véhicule au niveau de l'une (28) de ses deux zones d'extrémité (28, 32) et au niveau de son autre zone d'extrémité (32) supporte un support de roue (34), et un bras de suspension déployable (40) articulé sur le bras de suspension longitudinal (26) et guidant ce bras de suspension longitudinal (26) par rapport à la caisse du véhicule, ainsi qu'un élément de ressort (102) supportant le bras de suspension longitudinal (26) par rapport à la caisse du véhicule, et qui est monté sur le bras de suspension longitudinal (26) en direction de l'axe longitudinal du véhicule (20) en considérant la zone de l'articulation du bras de suspension déployable (40) sur le bras articulé longitudinal (26),
**caractérisé en ce que**
le bras articulé déployable (40) est articulé sur le bras de suspension longitudinal (26) à la partie interne de la jante (16) en projection latérale.

2. Suspension individuelle d'une roue conforme à la revendication 1, dans laquelle en projection latérale, le bras de suspension déployable (40) est monté ou situé en totalité à la partie interne de la jante (16).

3. Suspension individuelle d'une roue conforme à la revendication 1 ou 2, dans laquelle en projection latérale, l'élément de ressort (102) est monté ou situé en totalité à la partie interne de la jante (16).

4. Suspension individuelle d'une roue conforme à l'une des revendications 1 à 3, comprenant un amortisseur (110) supportant le bras de suspension longitudinal (26) par rapport à la caisse du véhicule, et qui est monté sur le bras de suspension longitudinal (26) dans la zone située à l'arrière du bras de suspension déployable (40) en considérant la direction de l'axe longitudinal (20) du véhicule.

5. Suspension individuelle d'une roue conforme à l'une des revendications 1 à 4,
dans laquelle une faible liberté de mouvement du bras de suspension déployable (40) en direction de l'axe longitudinal du véhicule (20) et en particulier également un guidage du bras de suspension longitudinal (26) en direction de l'axe transversal (22) du véhicule sont obtenus au moyen d'un appui pendulaire (52) articulé sur la caisse du véhicule.

6. Suspension individuelle d'une roue conforme à l'une des revendications 1 à 4,
dans laquelle une faible liberté de mouvement du bras de suspension déployable (40) en direction de l'axe longitudinal (20) du véhicule et en particulier également un guidage du bras de suspension longitudinal (26) en direction de l'axe transversal (22) du véhicule sont obtenus au moyen d'un appui de cardan (74) articulé sur la caisse du véhicule.

7. Suspension individuelle d'une roue conforme à la revendication 5 ou 6, dans laquelle l'appui pendulaire (52) ou l'appui au cardan (74) est situé en totalité à la partie interne de la jante (16) en projection latérale.

8. Suspension individuelle d'une roue conforme à l'une des revendications 1 à 7,
dans laquelle pour permettre de guider le bras de suspension longitudinal (26) en direction de l'axe vertical (24) du véhicule, le bras de suspension déployable (40) est articulé sur ce bras de suspension longitudinal (26) sur un axe de pivotement (42) s'étendant essentiellement dans la direction de l'axe transversal (22) du véhicule.

9. Suspension individuelle d'une roue conforme à l'une des revendications 1 à 8,
dans laquelle l'articulation du bras de suspension longitudinal (26) sur la caisse du véhicule au niveau de sa première zone d'extrémité (28) est obtenue au moyen d'un palier élastomère (30) permettant un mouvement relatif élastocinématique.
